# EUROPEAN PATENT APPLICATION

(11) **EP 4 851 663 A1**
(43) Date of publication of application: **09.12.2026**
(21) Application number: 25224369.6
(22) Date of filing: 17.12.2025
(51) Int. Cl.: G01S 7/486, G01S 7/497, G01S 17/42, G01S 17/894, G01S 17/931, G01S 7/484

(54) **ITOF CAMERA DEVICE FOR VEHICLE**

(30) Priority: 02.06.2025 KR 20250071798
(71) Applicant: Hyundai Mobis Co., Ltd., Gangnam-gu Seoul 06141 (KR)
(72) Inventor: KIM, Won Gyum, 16891 Yongin-si, Gyeonggi-do (KR)
(74) Representative: Jung, Minkyu

(57) **Abstract**

An indirect time of flight (iToF) camera device for a vehicle, comprises: an iToF sensor configured to provide a sensing signal by outputting a beam signal and receiving a reflected beam signal, a controller configured to provide surrounding object information of the vehicle based on the sensing signal and control the iToF sensor, wherein the controller controls a modulation frequency of the beam signal output from the iToF sensor and an exposure time of the iToF sensor based on driving environment information of the vehicle.

## Description

### BACKGROUND OF THE DISCLOSURE

### Field of the Disclosure

The disclosure relates to an indirect time of flight (iToF) camera device for a vehicle and more particularly to an iToF camera device for a vehicle, in which the exposure time and modulation frequency of an iToF camera are adjusted according to driving environment of a vehicle to detect a target object more accurately.

### Description of the Related Art

As vehicles become more intelligent, research on an advanced driver assistance system (ADAS) and an autonomous vehicle has recently been actively conducted.

To implement the ADAS and the autonomous vehicle, a variety of sensors are essential. Such sensors include radio detection and ranging (Radar), light detection and ranging (LiDAR), and a camera.

In particular, LiDAR is somewhat less accurate in object identification, but has the advantage of providing accurate distance information. Accordingly, most autonomous vehicles use LiDAR devices mounted at the front and rear thereof.

The LiDAR device typically employs a Time of Flight (ToF) camera, which transmits a beam, receives reflected waves from surrounding target objects and calculates a distance based on time between transmission and reception. A conventional ToF camera measures distance and depth information of objects based on invariable settings (modulation frequency, exposure time, etc.), thereby leading to performance degradation depending on variable driving environment.

For example, the ToF camera often fail to ensure optimal object detecting performance when a vehicle is moving at high speed or under weather conditions such as strong sunlight, rain, or fog. Accordingly, it is necessary to improve the object detection performance of the ToF camera by adjusting its settings based on the driving environment of the vehicle.

### SUMMARY OF THE DISCLOSURE

The disclosure is to address the foregoing problems, and an aspect of the disclosure is to provide an iToF camera device for a vehicle, in which the exposure time and modulation frequency of an iToF camera are adjusted according to driving environment of a vehicle to detect a target object more accurately.

According to an embodiment of the disclosure, an indirect time of flight (iToF) camera device for a vehicle includes: an iToF sensor module configured to provide a sensing signal by outputting a beam signal and receiving a reflected beam signal; and a controller configured to provide surrounding object information of the vehicle based on the sensing signal and control the iToF sensor module, wherein the controller controls a modulation frequency of the beam signal output from the iToF sensor module and an exposure time of the iToF sensor module based on driving environment information of the vehicle.

According to an embodiment, the driving environment information may include at least one of speed of the vehicle, illuminance around the vehicle, and weather information.

According to an embodiment, the controller may control the iToF sensor module based on information about the speed of the vehicle so that the modulation frequency of the beam signal generated by the iToF sensor module can be set lower as the speed of the vehicle increases.

According to an embodiment, the controller may control the iToF sensor module based on information about the illuminance around the vehicle so that the modulation frequency of the beam signal generated by the iToF sensor module can be set lower as the illuminance around the vehicle becomes higher.

According to an embodiment, the controller may control the iToF sensor module based on information about the speed of the vehicle so that the exposure time of the iToF sensor module can be set shorter as the speed of the vehicle increases.

According to an embodiment, the controller may control the iToF sensor module based on information about the illuminance around the vehicle so that the exposure time of the iToF sensor module can be set shorter as the illuminance around the vehicle becomes higher.

According to an embodiment, the controller determines the speed of the vehicle based on speed information of the surrounding objects included in the surrounding object information, and controls the iToF sensor module so that the modulation frequency of the beam signal generated by the iToF sensor module can be set lower as the speed of the vehicle increases.

According to an embodiment, the controller determines the illuminance around the vehicle based on the strength of the reflected and received beam signal, and controls the iToF sensor module so that the modulation frequency of the beam signal generated by the iToF sensor module can be set lower as the illuminance around the vehicle becomes higher.

According to an embodiment, the controller may control the iToF sensor module based on the weather information so that, in case of adverse weather, the modulation frequency of the beam signal generated by the iToF sensor module can be set lower and the exposure time of the iToF sensor module can be set longer.

According to an embodiment, the controller may control the iToF sensor module based on the weather information to increase the strength of the beam signal output from the iToF sensor module in the case of adverse weather.

### BRIEF DESCRIPTION OF THE DRAWINGS

FIG. 1 is a block diagram illustrating the configuration of an iToF camera device for a vehicle according to an embodiment of the disclosure.
FIG. 2 is a block diagram illustrating the configurations of an iToF camera device for a vehicle and a driving information detection module of a vehicle according to an embodiment of the disclosure.

### DETAILED DESCRIPTION OF THE DISCLOSURE

The above-described objects, features, and advantages of the disclosure will become more apparent from the following embodiments with reference to the accompanying drawings. The specific structures and functional descriptions set forth herein are merely illustrative for the purpose of describing exemplary embodiments according to the concept of the disclosure, and the disclosure can be embodied in various forms and is not to be construed as being limited to the specific embodiments described in this specification or application. Because the embodiments according to the concept of the disclosure may be subject to various modifications and take on various forms, specific embodiments are illustrated in the accompanying drawings and described in detail in this specification or application. However, these are not intended to limit the embodiments to specific disclosed forms. Rather, it should be understood that all modifications, equivalents, and substitutes fall within the spirit and scope of the disclosure. The terms such as "first" and/or "second" may be used to describe various components, but the components are not limited by these terms. These terms are used merely to distinguish one component from another. For example, a first component may be referred to as a second component without departing from the scope of the disclosure, and similarly, a second component may also be referred to as a first component. When it is stated that one component is connected to or coupled to another component, it should be understood that the component may be directly connected or coupled to the other component, or one or more intervening components may be present between them. In contrast, when it is stated that one component is directly connected to or directly coupled to another component, it should be understood that there are no intervening components between them. Other expressions used to describe a relationship between components, such as "between" and "directly between," or "adjacent to" and "directly adjacent to," should be interpreted in the same manner. The terminology used in this specification is intended only to describe particular embodiments and is not intended to limit the scope of the disclosure. As used herein, the singular forms also include the plural forms unless the context clearly indicates otherwise. As used in this specification, the terms such as "include" or "have" are intended to specify the presence of stated features, numbers, steps, operations, elements, or components, or combinations thereof, but do not preclude the presence or addition of one or more other features, numbers, steps, operations, elements, components, or combinations thereof. Unless otherwise defined, all terms used herein, including technical and scientific terms, have the same meanings as commonly understood by a person having ordinary knowledge in the art to which the disclosure pertains. Terms that are generally defined in commonly used dictionaries should be interpreted as having meanings consistent with their meanings in the context of the relevant technical field, and unless explicitly defined in this specification, they should not be interpreted in an idealized or overly formal sense. Hereinafter, exemplary embodiment of the disclosure will be described in detail with reference to the accompanying drawings. The same reference numerals in the drawings denote the same components.

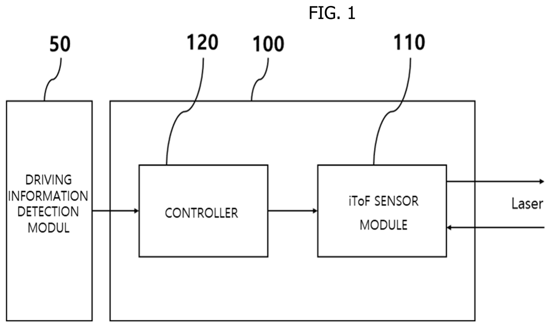

FIG. 1 is a block diagram illustrating the configuration of an iToF camera device for a vehicle according to an embodiment of the disclosure.

Referring to FIG. 1, an iToF camera device 100 for a vehicle according to the embodiment of the disclosure may include an iToF sensor module 110 and a controller 120. Further, the iToF camera device 100 for a vehicle may receive driving environment information from a driving information detection module 50 included in the vehicle. The controller 120 of the iToF camera device 100 for a vehicle may control the iToF sensor module 110 based on the driving environment information of the vehicle. The iToF sensor module 110 may be referred to as an iTOF sensor. According to an exemplary embodiment of the present disclosure, the driving information detection module 50 may include a processor (e.g., computer, microprocessor, CPU, ASIC, circuitry, logic circuits, etc.) and an associated non-transitory memory storing software instructions which, when executed by the processor, provides the functionalities of the driving information detection module 50 described herein. Herein, the memory and the processor may be implemented as separate semiconductor circuits. Alternatively, the memory and the processor may be implemented as a single integrated semiconductor circuit. The processor may embody one or more processor(s).

The iToF sensor module 110 may include a receiver and a transmitter to output a beam signal and receive a reflected beam signal, thereby providing a sensing signal. The sensing signal provided by the iToF sensor module 110 through the beam signal may include distance and depth information of objects around the vehicle. In other words, the iToF sensor module 110 may provide a sensing signal including distances between the vehicle and the surrounding objects, depth information of the surrounding objects, etc. based on time it takes for the beam signal to be transmitted from the transmitter, reflected by the surrounding objects of the vehicle, and then received by the receiver.

The controller 120 may provide information about surrounding objects of the vehicle based on the sensing signal provided from the iToF sensor module 110. In other words, the controller 120 may provide information about surrounding objects, including the shape, distance, etc. of objects around the vehicle, based on the sensing signal.

Further, the controller 120 may receive the driving environment information from the driving information detection module 50 included in the vehicle, and control the modulation frequency of the beam signal output from the iToF sensor module 110 and the exposure time of the iToF sensor module 110 based on the driving environment information of the vehicle.

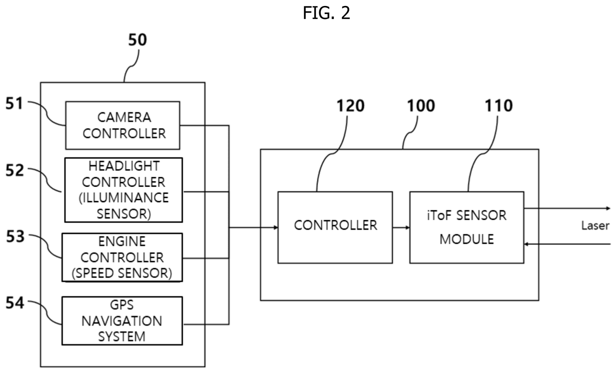

FIG. 2 is a block diagram illustrating the configurations of an iToF camera device for a vehicle and a driving information detection module of a vehicle according to an embodiment of the disclosure.

Referring to FIG. 2, the iToF camera device 100 for a vehicle according to the embodiment of the disclosure may include the iToF sensor module 110 and the controller 120. Further, the iToF camera device 100 for a vehicle may receive the driving environment information from the driving information detection module 50 included in the vehicle. The controller 120 of the iToF camera device 100 for a vehicle may control the iToF sensor module 110 based on the driving environment information of the vehicle. In this case, the driving information detection module 50 may include a camera controller 51, a headlight controller 52 including an illuminance sensor, an engine controller 53 including a speed sensor, and a GPS navigation system 54. The driving information detection module 50 refers to a component included in the vehicle, and may further include various sensors capable of detecting the driving environment of the vehicle in addition to the foregoing components.

The controller 120 may receive the driving environment information from the driving information detection module 50 included in the vehicle, and control the modulation frequency of the beam signal output from the iToF sensor module 110 and the exposure time of the iToF sensor module 110 based on the driving environment information of the vehicle. In this case, the driving environment information of the vehicle may include at least one of speed information of the vehicle, illuminance information around the vehicle, and weather information. Here, the speed information of the vehicle may be the vehicle's driving speed information provided by a speed sensor included in the vehicle, the illuminance information around the vehicle may be illuminance information of an area around the vehicle detected by an illuminance sensor included in the vehicle, and the weather information may include weather information of an area where the vehicle is driving, which is acquired from an external device.

The controller 120 may control the iToF sensor module 110 so that the modulation frequency of the beam signal generated by the iToF sensor module 110 can be set lower as the speed of the vehicle increases, based on the vehicle's speed information. Conversely, the controller 120 may control the iToF sensor module 110 so that the modulation frequency of the beam signal generated by the iToF sensor module 110 can be set higher as the speed of the vehicle decreases, based on the vehicle's speed information.

Further, the controller 120 may control the iToF sensor module 110 so that the modulation frequency of the beam signal generated by the iToF sensor module 110 can be set lower as the illuminance around the vehicle becomes higher, based on illuminance information around the vehicle. Conversely, the controller 120 may control the iToF sensor module 110 so that the modulation frequency of the beam signal generated by the iToF sensor module 110 can be set higher as the illuminance around the vehicle becomes lower, based on illuminance information around the vehicle.

In other words, the controller 120 may adjust the modulation frequency of the beam signal generated by the iToF sensor module 110 depending on the speed of the vehicle or the illuminance around the vehicle, thereby improving object detection performance. For example, the controller 120 may prevent aliasing during distance measurement by applying a lower modulation frequency as the speed of the vehicle increases, and enhance detection accuracy by applying a lower modulation frequency to reduce interference from extraneous light and improve a signal-to-noise ratio when the illuminance is high.

Further, the controller 120 may control the iToF sensor module 110 so that the exposure time of the iToF sensor module 110 can be set shorter as the speed of the vehicle increases, based on the vehicle's speed information. Conversely, the controller 120 may control the iToF sensor module 110 so that the exposure time of the iToF sensor module 110 can be set longer as the speed of the vehicle decreases, based on the vehicle's speed information.

Furthermore, the controller 120 may control the iToF sensor module 110 so that the exposure time of the iToF sensor module 110 can be set shorter as the illuminance around the vehicle becomes higher, based on illuminance information around the vehicle. Conversely, the controller 120 may control the iToF sensor module 110 so that the exposure time of the iToF sensor module 110 is set to be longer as the illuminance around the vehicle becomes lower, based on illuminance information around the vehicle.

In other words, the controller 120 can improve object detection performance by adjusting the exposure time of the iToF sensor module 110 depending on the speed of the vehicle or the illuminance around the vehicle. For example, the controller 120 can prevent a motion blur by shortening the exposure time of the camera when the vehicle is driving at high speed, and prevent sensor overexposure by shortening the exposure time when the illuminance around the vehicle is high.

Further, the controller 120 may control simultaneously the modulation frequency of the beam signal generated by the iToF sensor module 110 and the exposure time of the iToF sensor module 110 depending on the speed of the vehicle or the illuminance around the vehicle.

Furthermore, the controller 120 may independently determine the speed of the vehicle based on speed information of surrounding objects included in surrounding object information generated based on the sensing signal provided by the iToF sensor module 110, and control the iToF sensor module 110 so that the modulation frequency of the beam signal generated by the iToF sensor module 110 can be set lower as the speed of the vehicle increases. In other words, the controller 120 may control the iToF sensor module 110 by estimating the speed of the vehicle based on the surrounding object information even though the vehicle's speed information is not received from an external device, i.e., the driving information detection module 50.

Further, the controller 120 may determine the illuminance around the vehicle based on the strength of the reflected and received beam signal based on the sensing signal provided by the iToF sensor module 110, and control the iToF sensor module 110 so that the modulation frequency of the beam signal generated by the iToF sensor module 110 can be set lower as the illuminance around the vehicle becomes higher. In other words, the controller 120 may control the iToF sensor module 110 by estimating the illuminance around the vehicle based on the strength of the reflected beam signal even though information about the illuminance around the vehicle is not received from an external device, i.e., the driving information detection module 50.

Furthermore, the controller 120 may control the iToF sensor module 110 based on weather information included in the driving environment information so that the modulation frequency of the beam signal generated by the iToF sensor module 110 can be set lower and the exposure time of the iToF sensor module 110 can be set longer in case of adverse weather conditions (rain, snow, fog, etc.). Further, the controller 120 may control the iToF sensor module 110 to increase the strength of the beam signal output from the iToF sensor module 110 in the case of adverse weather conditions.

Furthermore, the controller 120 may calculate an illuminance correction coefficient based on a combination of illuminance around the vehicle and weather information, and control the iToF sensor module 110 so that the exposure time and the modulation frequency of the iToF sensor module 110 can be controlled based on the illuminance correction coefficient. In this case, the illuminance correction coefficient may be classified into three levels: Low, Middle, and High, and the speed of the vehicle may also be classified into three levels: Low, Middle, and High. The controller 120 may assign a score based on the speed of the vehicle and the illuminance correction coefficient, which have respectively been classified into three levels, and control the modulation frequency of the beam signal output from the iToF sensor module 110 and the exposure time of the iToF sensor module 110 based on the assigned score. The controller 120 may assign the scores based on the illuminance correction coefficient and the speed, as shown in the following [Table 1].

**[Table 1]**

| | | Speed of vehicle | | |
|---|---|---|---|---|
| | | Low(1) | Middle(3) | High(5) |
| illuminance correction coefficient | Low(1) | 1 | 3 | 5 |
| | Middle(3) | 3 | 9 | 15 |
| | High(5) | 5 | 15 | 25 |

When the score is greater than 15, the controller 120 may control the iToF sensor module 110 so that the modulation frequency of the beam signal output from the iToF sensor module 110 can be set to a Low value and the exposure time of the iToF sensor module 110 can be set to a Low value.

Further, when the score is 10 or more and 15 or less, the controller 120 may control the iToF sensor module 110 so that the modulation frequency of the beam signal output from the iToF sensor module 110 can be set to a Middle value and the exposure time of the iToF sensor module 110 can be set to a Middle value.

Furthermore, when the score is less than 10, the controller 120 may control the iToF sensor module 110 so that the modulation frequency of the beam signal output from the iToF sensor module 110 can be set to a High value and the exposure time of the iToF sensor module 110 can be set to a High value.

According to the disclosure, object detection performance can be improved by dynamically adjusting the modulation frequency and exposure time of the iToF camera depending on the vehicle's driving environment.

Further, according to the disclosure, there is provided an adaptive camera system robust to environmental changes based on complex driving environment information such as speed, illuminance, and weather.

Furthermore, according to the disclosure, lower modulation frequencies are used at higher speeds, thereby prevent aliasing during distance measurements.

Further, according to the disclosure, when the illuminance is high, a lower modulation frequency is applied to reduce interference from extraneous light and improve the signal-to-noise ratio, thereby enhancing detection accuracy.

Further, according to the disclosure, the exposure time of the camera is shortened when the vehicle is driving at high speed, thereby preventing a motion blur.

Further, according to the disclosure, the exposure time is shortened when the illuminance is high, thereby preventing the overexposure of the sensor.

Further, according to the disclosure, the iToF sensor module is controlled based on the vehicle's speed and illuminance independently estimated from the driving environment information, thereby enabling adaptive sensing control even when the vehicle does not have its own speed sensor and illuminance sensor.

Although exemplary embodiments of the disclosure have been described above, the embodiments are merely illustrative and not intended to limit the technical spirit of the disclosure. Therefore, the scope of the technical spirit of the disclosure is not limited to each of the disclosed embodiments, but also includes combinations of the disclosed embodiments. Furthermore, the technical spirit of the disclosure should not be construed as being limited by these embodiments. In addition, it will be apparent to those skilled in the art that various modifications and alterations can be made to the disclosure without departing from the spirit and scope defined by the appended claims. All such appropriate modifications and alterations are to be regarded as falling within the scope of the disclosure as equivalents.

## Claims

1. An indirect time of flight (iToF) camera device for a vehicle, comprising:
an iToF sensor configured to provide a sensing signal by outputting a beam signal and receiving a reflected beam signal; and
a controller configured to provide surrounding object information of the vehicle based on the sensing signal and control the iToF sensor,
wherein the controller controls a modulation frequency of the beam signal output from the iToF sensor and an exposure time of the iToF sensor based on driving environment information of the vehicle.

2. The iToF camera device of claim 1, wherein the driving environment information comprises at least one of speed of the vehicle, illuminance around the vehicle, and weather information.

3. The iToF camera device of claim 2, wherein the controller controls the iToF sensor based on information about the speed of the vehicle so that the modulation frequency of the beam signal generated by the iToF sensor can be set lower as the speed of the vehicle increases.

4. The iToF camera device of claim 2 or 3, wherein the controller controls the iToF sensor based on information about the illuminance around the vehicle so that the modulation frequency of the beam signal generated by the iToF sensor can be set lower as the illuminance around the vehicle becomes higher.

5. The iToF camera device of claim 2, wherein the controller controls the iToF sensor based on information about the speed of the vehicle so that the exposure time of the iToF sensor can be set shorter as the speed of the vehicle increases.

6. The iToF camera device of claim 2 or 5, wherein the controller controls the iToF sensor based on information about the illuminance around the vehicle so that the exposure time of the iToF sensor can be set shorter as the illuminance around the vehicle becomes higher.

7. The iToF camera device of any one of claims 1 to 6, wherein the controller determines the speed of the vehicle based on speed information of surrounding objects included in the surrounding object information, and controls the iToF sensor so that the modulation frequency of the beam signal generated by the iToF sensor can be set lower as the speed of the vehicle increases.

8. The iToF camera device of any one of claims 1 to 7, wherein the controller determines illuminance around the vehicle based on a strength of the reflected beam signal, and controls the iToF sensor so that the modulation frequency of the beam signal generated by the iToF sensor can be set lower as the illuminance around the vehicle becomes higher.

9. The iToF camera device of any one of claims 2 to 8, wherein the controller controls the iToF sensor based on the weather information so that, in case of adverse weather, the modulation frequency of the beam signal generated by the iToF sensor can be set lower and the exposure time of the iToF sensor can be set longer.

10. The iToF camera device of any one of claims 2 to 9, wherein the controller controls the iToF sensor based on the weather information to increase the strength of the beam signal output from the iToF sensor in the case of adverse weather.
